# EUROPÄISCHE PATENTSCHRIFT

(11) **EP 1 078 798 B1**
(45) Veröffentlichungstag und Bekanntmachung des Hinweises auf die Patenterteilung: **05.04.2006**
(21) Anmeldenummer: 00117585.0
(22) Anmeldetag: 16.08.2000
(51) Int. Cl.: B60J 7/20

(54) **Cabriolet-Fahrzeug mit einem in einem Verdeckkasten ablegbaren Dach**
Vehicle with convertible roof storable in a soft top storage compartment
Véhicule automobile avec une capote escamotable dans un compartiment de stockage

(30) Priorität: 20.08.1999 DE 19939505
(43) Veröffentlichungstag der Anmeldung: 28.02.2001
(73) Patentinhaber: Wilhelm Karmann GmbH, 49084 Osnabrück (DE)
(72) Erfinder: Braksiek, Martina, 49191 Belm (DE); Dietze, Michael, 49124 Georgsmarienhütte (DE); Rumprecht, Harry, 49549 Ladbergen (DE)
(74) Vertreter: Busse & Busse Patentanwälte

(56) Entgegenhaltungen:
- EP-A- 0 860 312
- DE-A- 19 723 328
- DE-U- 29 809 006
- US-A- 4 969 679
- US-A- 5 810 413

## Beschreibung

Die Erfindung bezieht sich auf ein Cabriolet-Fahrzeug mit einem gegenüber dem Kofferraum durch eine variable Trennvorrichtung abgeteilten Verdeckkasten nach dem Oberbegriff des Anspruchs 1.

Die DE 195 41 168 C1 zeigt ein Cabriolet-Fahrzeug mit einer Trennvorrichtung zwischen dem Kofferraum und dem Verdeckkasten, wobei die Trennvorrichtung drei aufeinanderfolgende starre, plattenförmige Elemente umfaßt. Die äußeren beiden sind karosserieseitig fest angelenkt; alle drei sind gegeneinander schwenkbar, so daß die drei Plattenteile mit den vier randseitigen und zwischenliegenden Gelenken ein Viergelenk ausbilden. Bei Krafteinleitung auf ein Plattenteil werden somit alle drei Teile in definierter Weise bewegt. Eine derartige Trennvorrichtung ist nur in zwei stabilen Endlagen halterbar. Durch die Starrheit aller Teile ist eine darüber hinausgehende Flexibilität nicht ermöglicht. Die plattenförmigen Elemente benötigen auch in Gepäckaufnahmestellung relativ viel Raum und sind insbesondere nicht nachgiebig, so daß auch bei nur geringfügig zu großen Gepäckstücken deren Einlagerung in den Kofferraum nicht mehr möglich ist.

Ein Cabriolet-Fahrzeug gemäß dem Oberbegriff des Anspruchs 1 ist aus der US-A- 4 969 679 bekannt.

Der Erfindung liegt das Problem zugrunde, ein Cabriolet-Fahrzeug der eingangs genannten Art hinsichtlich seiner Trennvorrichtung dahingehend zu verbessern, daß deren Variabilität erhöht ist.

Die Erfindung löst dieses Problem mit den Merkmalen des Anspruchs 1. Hinsichtlich weiterer vorteilhafter Ausgestaltungen der Erfindung wird auf die Ansprüche 2 bis 12 verwiesen.

Mit dem erfindungsgemäß zumindest bereichsweise flexiblen vorderen Teil der Trennvorrichtung ist dieser innerhalb festgelegter Toleranzen nachgiebig ausgebildet, so daß sogar in gespannter Stellung dieses Teils ein begrenztes Nachrücken von Gepäckstücken und leichtes Ausbeulen des flexiblen Teils ermöglicht ist, ohne dadurch den Schutz des eingelegten Verdecks zu verlieren. Insbesondere ist eine Nachgiebigkeit bei geschlossenem Dach gegeben. Insgesamt ist ein leichtes, flexibles Teil leicht zu bewegen und einfach zu montieren. Durch die höhenvariable Festlegung des vorderen Endes des vorderen Teils an der Karosserie ist die Flexibilität weiter erhöht, es können beispielsweise Zugänge zu ansonsten verdeckten Fächern in der Spritzwand bzw. einer Rücklehne von hinteren Fahrzeugsitzen freigegeben werden, in denen Wertsachen untergebracht werden können. Auch kann beispielsweise bei in oberer Stellung befindlichem vorderen Ende der Zugang zu einem Staufach unter einer Rücksitzbank freigegeben sein.

Insbesondere ist jedoch vorteilhaft die Höhenverlagerbarkeit des vorderen Endes des vorderen Teils dazu vorgesehen, eine Durchlademöglichkeit in den Fahrzeuginnenraum, also insbesondere für Skier, Surfbretter oder andere lange Gegenstände, freizugeben. Damit sind die Transportmöglichkeiten insbesondere eines mit einer Rückbank versehenen Cabriolets erheblich erweitert. Dieses kann beispielsweise bei geschlossenem Dach zur Fahrt in den Urlaub mit den genannten Gepäckstücken versehen werden.

Bei Ausbildung der vorderen Befestigung des vorderen Teils an einem Schwenkhebel kann durch einfaches Umlegen dieses Schwenkhebels die Freigabeposition für die Durchlademöglichkeit eingestellt bzw. die Normalposition mit verschlossener Durchlademöglichkeit erreicht werden. Dieses kann durch einen einzigen Handgriff bewerkstelligt werden, auch die Anordnung eines Antriebs hierfür ist möglich. Durch die Flexibilität des vorderen Teils der Trennvorrichtung kann hierbei dieser Teil in Normalposition gespannt sein und in Freigabestellung, in der das vordere Ende nach oben verlagert ist, in einer entspannten, durchhängenden Lage gehalten sein.

Weitere Vorteile und Merkmale ergeben sich aus einem in der Zeichnung dargestellten Ausführungsbeispiel des Gegenstandes der Erfindung.

In der Zeichnung zeigt:

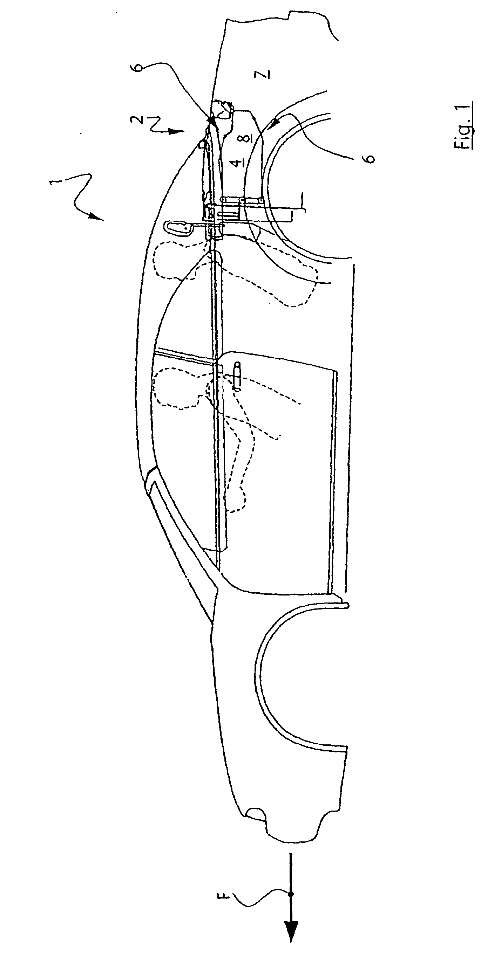

- Fig. 1: ein erfindungsgemäßes Cabriolet-Fahrzeug in schematischer Gesamtansicht mit angedeuteter Gepäckaufnahme- und Verdeckaufnahmestellung der Trennvorrichtung,
- Fig. 2: den Ausschnitt II aus Fig. 1 mit der Trennvorrichtung in Verdeckaufnahmestellung,
- Fig. 3: eine ähnliche Ansicht wie Fig. 2 der Trennvorrichtung in Gepäckaufnahmestellung,
- Fig. 4: eine ähnliche Ansicht wie Fig. 3 der Trennvorrichtung in Gepäckaufnahmestellung mit aufwärtsgeschwenktem vorderem Ende des vorderen Teils der Trennvorrichtung zur Freigabe der Durchladeöffnung,
- Fig. 5: das Detail V in Fig. 2,
- Fig. 6: eine teilweise aufgebrochene Detailansicht der Verbindung zwischen den starren Teilen,
- Fig. 7: eine Ansicht auf die Trennvorrichtung nach Fig. 2 in Ansicht von schräg hinten,
- Fig. 8: eine weitere Ansicht auf die Trennvorrichtung in Verdeckaufnahmestellung nach Fig. 2 in Ansicht schräg von vorne,
- Fig. 9: das Detail IX aus Fig. 8,
- Fig. 10: eine Ansicht auf die Arretierungsmittel und das Betätigungselement zu deren Lösung,

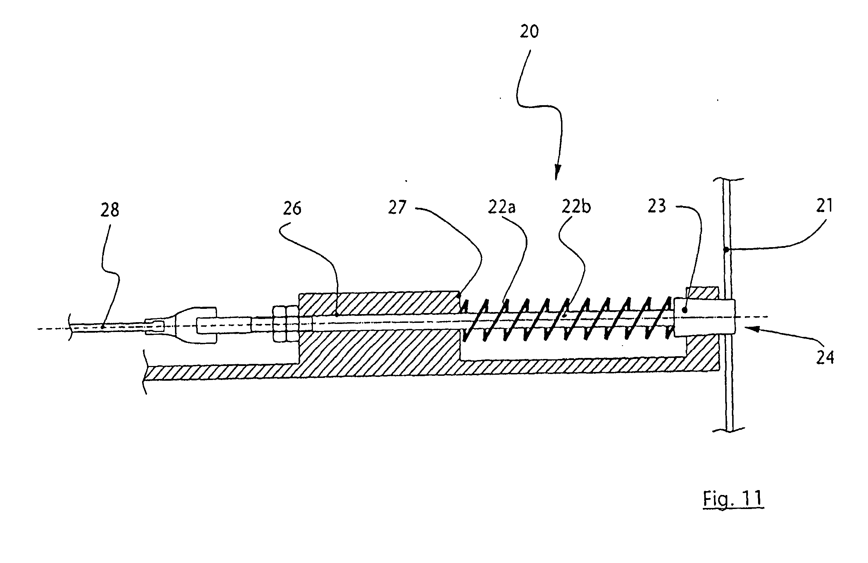

- Fig. 11: eine Detailansicht eines Arretierungsmittels,
- Fig. 12: eine ähnliche Ansicht wie Fig. 2 einer alternativen Version mit einem zusätzlichen Fanghaken im Bereich des Verdeckkastendeckels,
- Fig. 13: eine ähnliche Ansicht wie Fig. 3 der Alternativversion,
- Fig. 14: eine ähnliche Ansicht wie Fig. 4 der Alternativversion,

- Fig. 15: eine ähnliche Ansicht wie Fig. 14 einer weiteren Alternatiwersion mit einer als Rollowalze ausgebildeten Spannvorrichtung für den vorderen Teil der Trennvorrichtung,
- Fig. 16: eine ähnliche Ansicht wie Fig. 15 einer weiteren Alternatiwersion mit einem Raffband als Spannvorrichtung,
- Fig. 17: eine ähnliche Ansicht wie Fig. 16 einer weiteren Alternatiwersion mit einem Zugseil als Spannvorrichtung.

Ein erfindungsgemäßes Cabriolet-Fahrzeug 1 weist ein im rückwärtigen Fahrzeugbereich 2 ablegbares Dach 3 auf, das in abgelegter Stellung in einem Verdeckkasten 4 aufgenommen ist. Dieser ist von einem Verdeckkastendeckel 5 oberseitig abdeckbar.

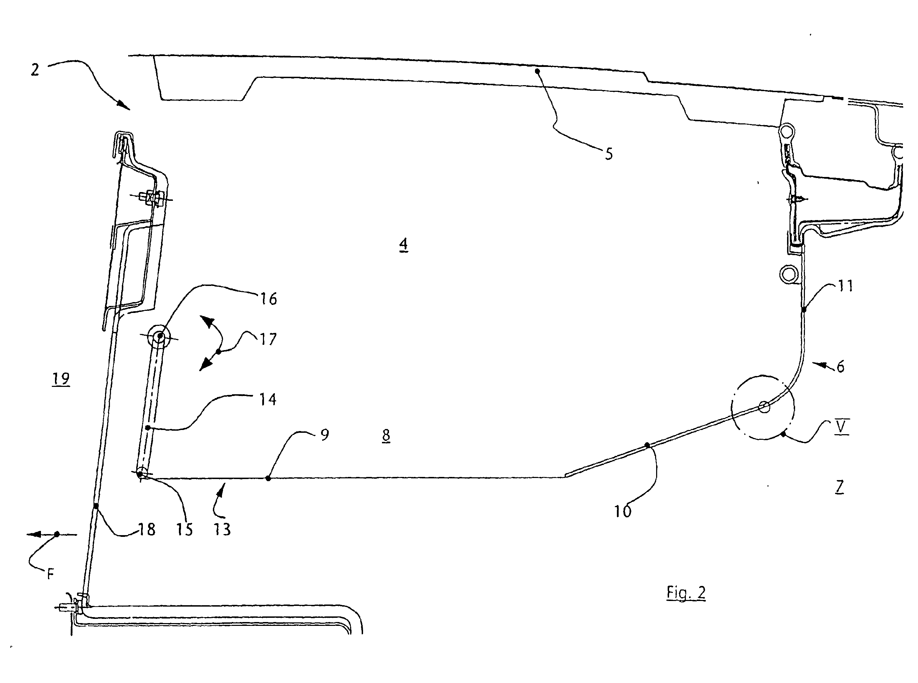

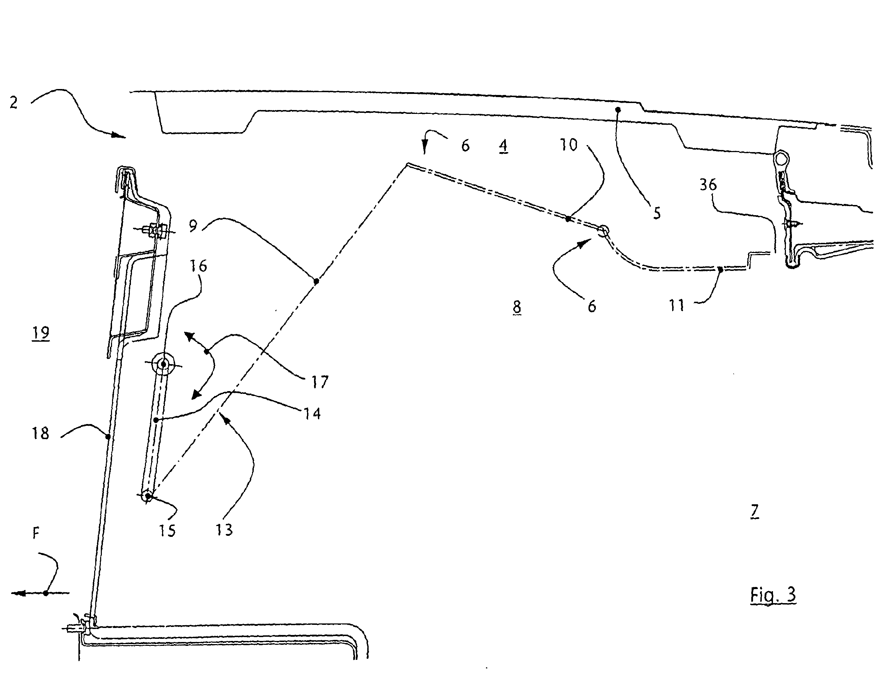

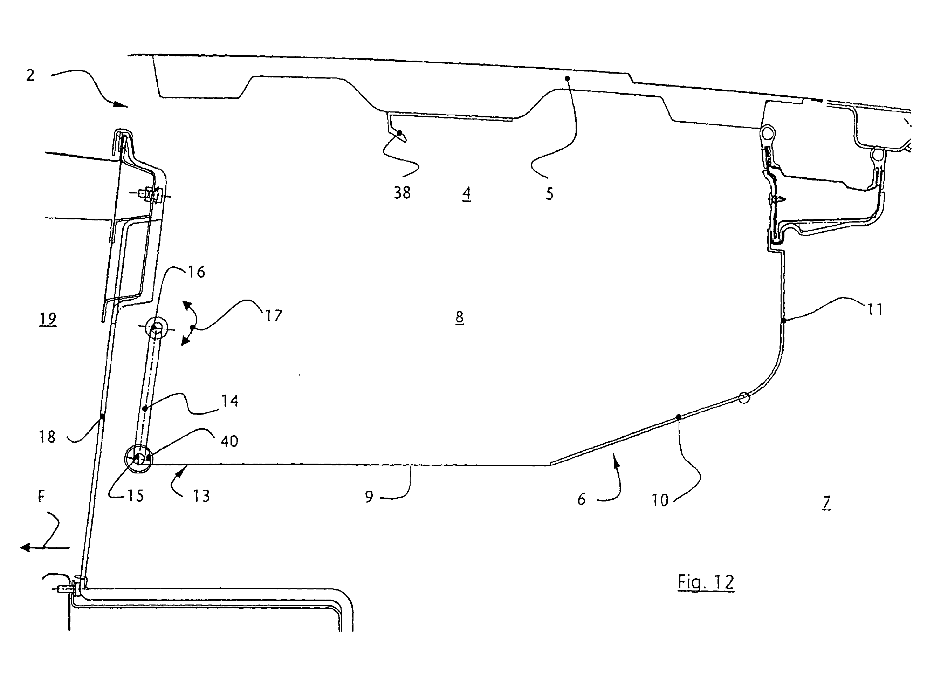

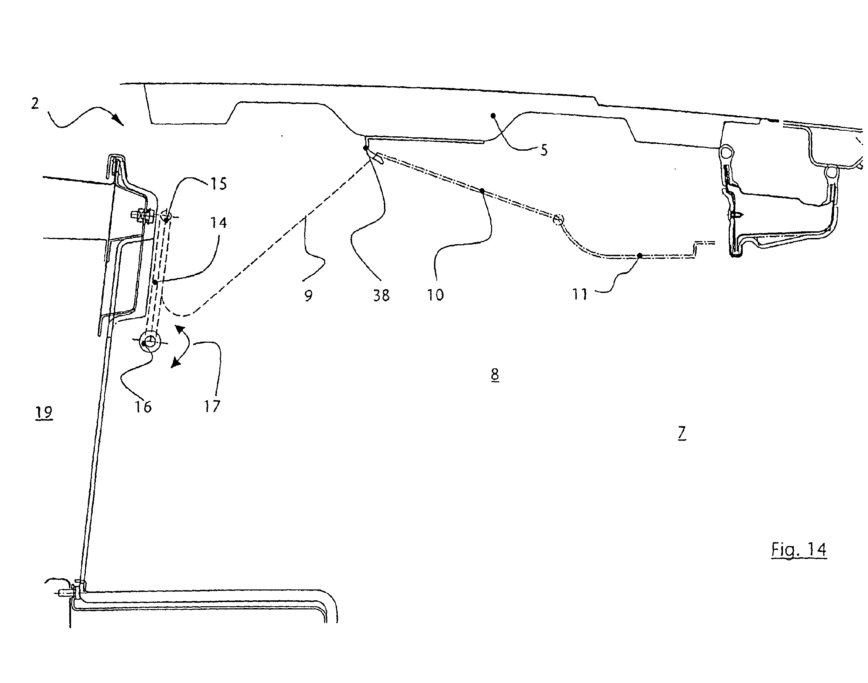

Eine insgesamt mit 6 bezeichnete Trennvorrichtung bildet eine unter- und rückseitige Begrenzung des Verdeckkastens 4 gegenüber dem Kofferraum 7. In Verdeckaufnahmestellung (Fig. 2, Fig. 12), in der das Dach 3 in den Verdeckkasten 4 einlegbar oder eingelegt ist, ist ein Zusatzraum 8 als Vergrößerung des Verdeckkastens 4 ausgebildet und wird von der Trennvorrichtung 6 gegenüber dem Kofferraum 7 abgegrenzt. In der Gepäckaufnahmestellung, also bei geschlossenem Dach 3 (Fig. 3, Fig. 4, Fig. 13 - Fig. 17) nach Fig. 3 bildet der Zusatzraum 8 einen Teil des Kofferraums 7 aus, der Verdeckkasten 4 ist in dieser Stellung entsprechend verkleinert.

Die Trennvorrichtung 6 umfaßt gemäß dem Ausführungsbeispiel einen in Fahrtrichtung F vorderen, aus flexiblem Material bestehenden Teil 9, einen mittleren, im wesentlichen starr ausgebildeten Teil 10 sowie einen hinteren, ebenfalls im wesentlichen starr ausgebildeten Teil 11. An Stelle der dreiteiligen Ausbildung ist auch eine andere Anzahl von Teilen möglich. In jedem Fall ist der vordere Teil 9 zumindest bereichsweise flexibel ausgebildet, d.h., daß zumindest ein sich über die gesamte Querbreite des Teils 9 erstreckender Bereich flexibel ist. Insbesondere ist ein fester Rahmen nicht vorhanden, so daß eine Faltung um die Querachse des Teils 9 möglich ist. Im Ausführungsbeispiel ist der gesamte Teil 9 flexibel ausgebildet und ist insgesamt spann- und dehnbar.

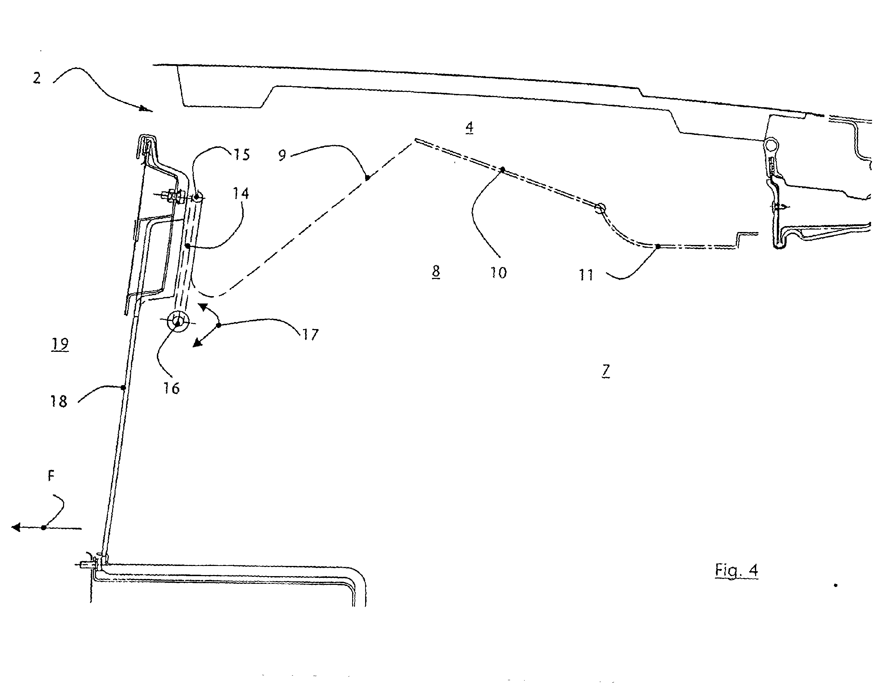

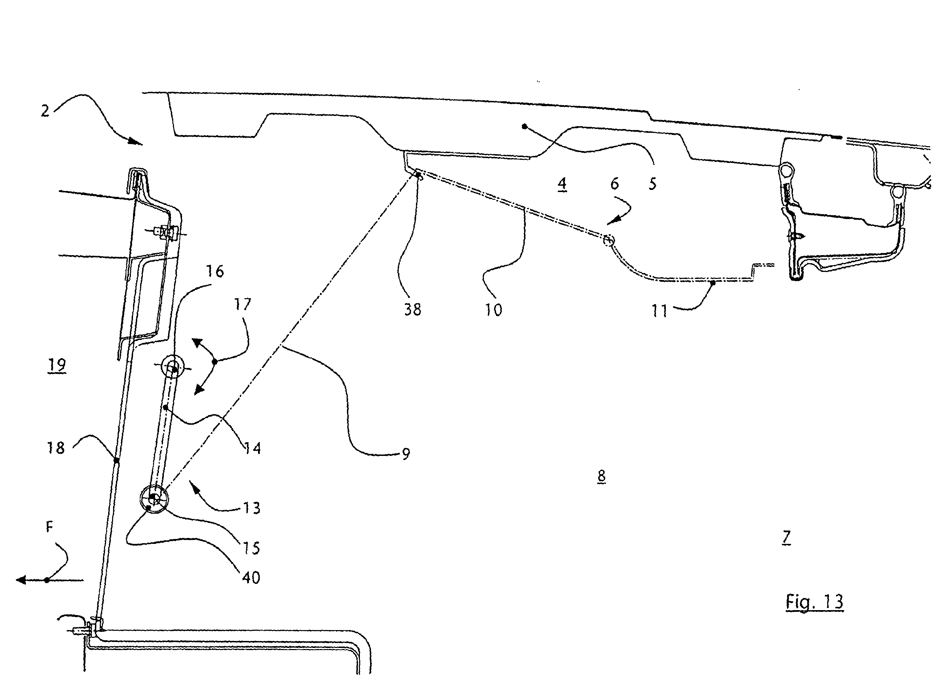

Das vordere Ende 13 des flexiblen vorderen Teils 9 der Trennvorrichtung 6 ist gegenüber der Karosserie höhenvariabel gehalten. Hierzu ist es an dem Querholm 15 eines Schwenkhebels 14 befestigt. Der Schwenkhebel 14 ist entlang dem Pfeil 17 um eine horizontale, sich in Fahrzeugquerrichtung erstreckende Achse 16 schwenkbar, so daß das vordere Ende 13 des Teils 9 zwischen der in Fig. 3, Fig. 13 gezeigten unteren Normalposition und einer in Fig. 4, Fig. 14 - Fig. 17 gezeigten oberen Freigabeposition verlagerbar ist. An Stelle des gezeigten Schwenkhebels 14 kommen auch andere Mechanismen, beispielsweise eine vertikale Kulissenführung, in Frage.

Die gezeigte Schwenkachse 16 liegt mittig zwischen der unteren Normalposition und der oberen Freigabeposition des Teils 9. In der in Fig. 4, Fig. 14 - Fig. 17 gezeigten Freigabeposition ist eine Durchlademöglichkeit 18, etwa für Skier oder dergleichen sperrige Gegenstände, in den Fahrzeuginnenraum 19 freigegeben. In dieser Stellung hängt der flexible Teil 9 durch, wohingegen er in der Stellung nach Fig. 3, d.h. bei Einrichtung der Gepäckaufnahmestellung durch die Trennvorrichtung 6 und gleichzeitig nach unten geschwenkte Normalposition des vorderen Endes 13 des Teils 9, eine maximal gespannte Lage einnimmt.

Es kann vorgesehen sein, daß der Schwenkhebel 14 in der Verdeckaufnahmestellung nach Fig. 2, Fig. 12 blockiert ist, so daß er nicht nach oben in den dann vom eingelegten Verdeck eingenommenen Raum 4 und 8 einschwenkbar ist.

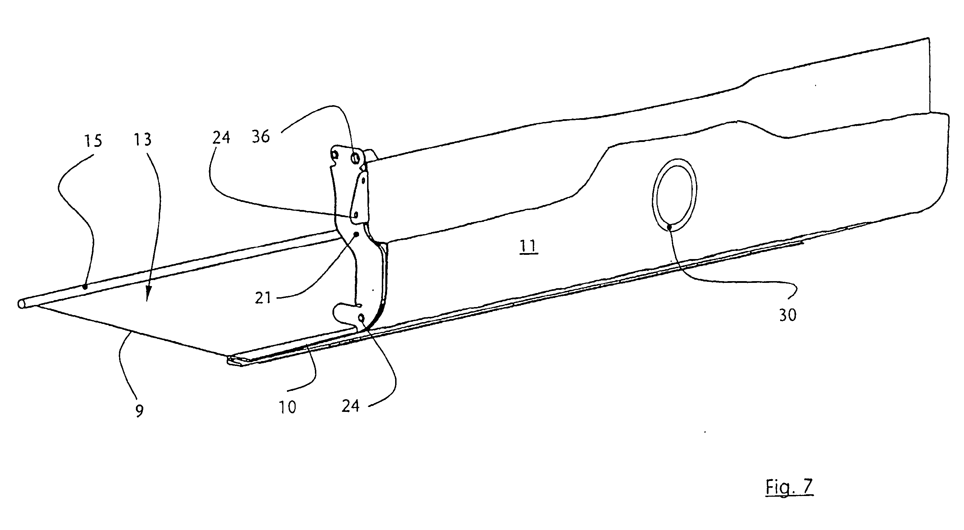

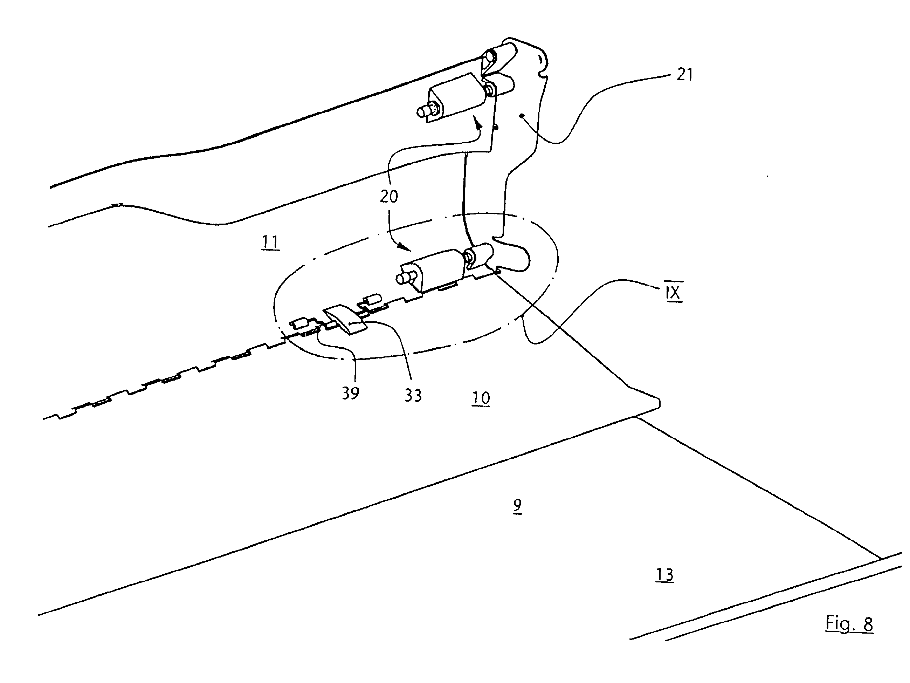

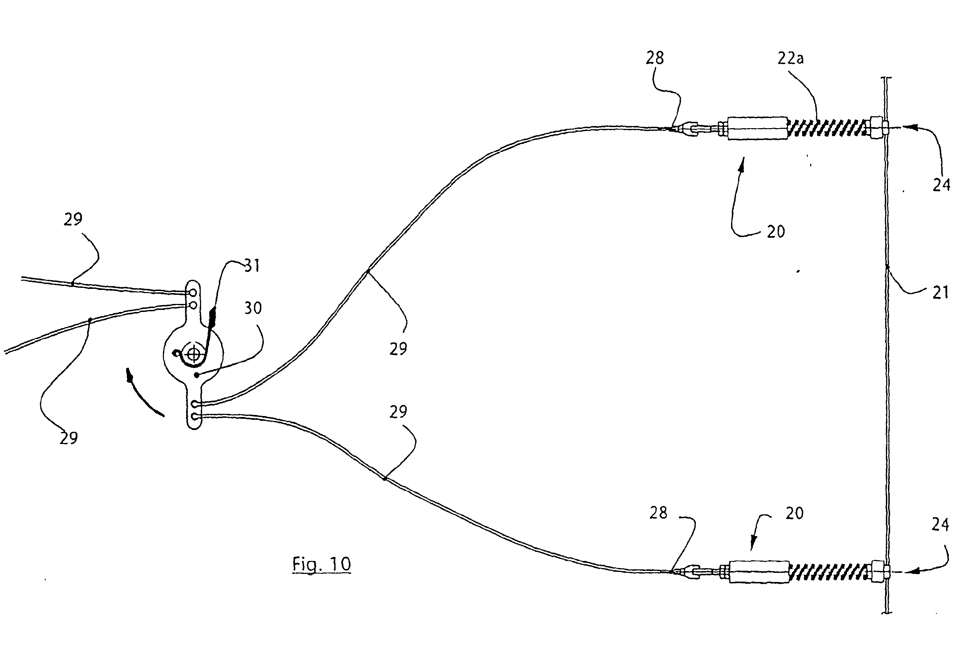

In der in Fig. 2, Fig. 12 gezeigten Verdeckaufnahmestellung ist der hintere Teil 11 (sh. Fig. 7, Fig. 8) über Arretierungsmittel 20 in seitlichen, vertikalen Karosserieblechen 21 festgelegt. Die Arretierungsmittel 20 umfassen im einzelnen (Fig. 10) über Federn 22a gelagerte Stifte 22b, wobei die Feder 22a auf einen vorderen Teil 23 des Stifts 22b einwirkt und diesen auswärts in eine Bohrung 24 des karosseriefesten seitlichen Blechs 21 preßt. Die Stifte 22b sind in einer Führung 26 längsverschieblich gehalten, das auswärtsgerichtete Ende 27 des die Führung 26 aufnehmenden Blockes dient als Gegenlager für die Feder 22a. An seinem dem karosserieseitigen Blech 21 abgewandten Ende weist der Stift 22b ein Zugglied 28 auf, das über Drahtseile 29 mit einem zentralen Betätigungselement 30, hier als Drehgriff ausgeführt, verbunden ist. Der Drehgriff 30 ist ebenfalls über eine Feder 31 gelagert, die eine Rückstellkraft auf ihn ausübt.

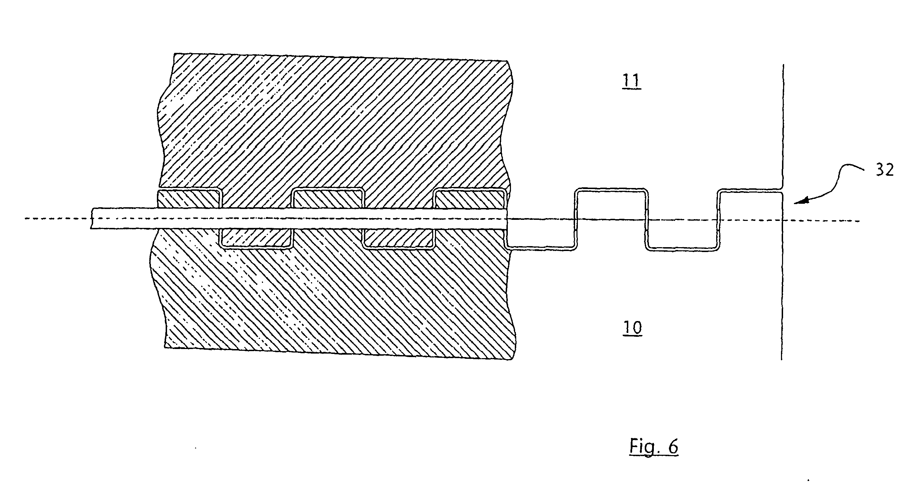

Die starren Teile 11 und 10 sind über ein Scharnier 32 miteinander verbunden, das unterschiedlich ausgebildet sein kann. Eine Ausbildung ist in Fig. 6 dargestellt.

Im Bereich des Scharniers 32 können Anschläge 33 und 34 vorgesehen sein. Diese begrenzen den Schwenkwinkel der Teile 10 und 11 gegeneinander und sind über den Querverlauf des Fahrzeugs 1 versetzt angeordnet.

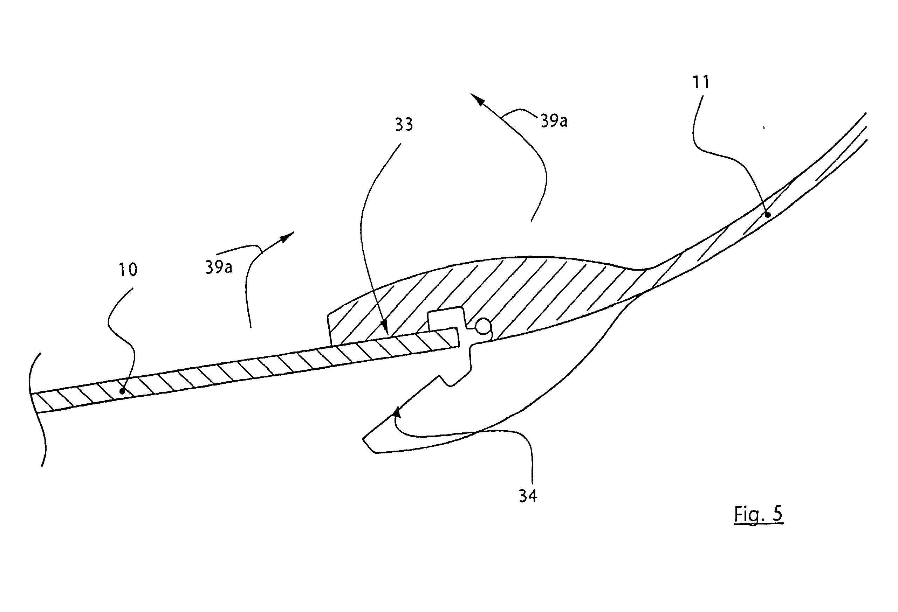

In der Verdeckaufnahmestellung nach Fig. 2 wirkt einerseits die Gewichtskraft des Teils 10 im Sinne eines Abwärtsverschwenkens dieses Teils, andererseits ist es durch den Teil 9, der in dieser Stellung gespannt ist, unter Zugkraft gesetzt, so daß es, wie in Fig. 5 dargestellt, am oberen Anschlag 33 gegenüber dem hinteren starren Teil 11 anliegt. In dieser Stellung kann ein eingelegtes Verdeck, das mit seinen quer zum Fahrzeug verlaufenden Gestängeteilen, insbesondere Spriegeln, oberhalb des starren Teils 10 liegen würde, eine leichte Druckbewegung auf dieses Teil ausüben, die das Teil 10 durch Ausweichen nach unten hin ermöglichen würde. Dabei würde das vordere Teil 9 weiter gedehnt, wodurch eine Rückstellkraft auf das Teil 10 ausgeübt wird. Durch diese Nachgiebigkeit werden zu große Preßkräfte auf das eingelegte Verdeck vermieden. Dieses kann insbesondere bei älteren Verdecken, deren Faltung nicht mehr den Erfordernissen des Neuverdecks entspricht, von positiver Bedeutung sein, da dadurch das Eindrücken von Knicken in das Verdeck vermieden wird.

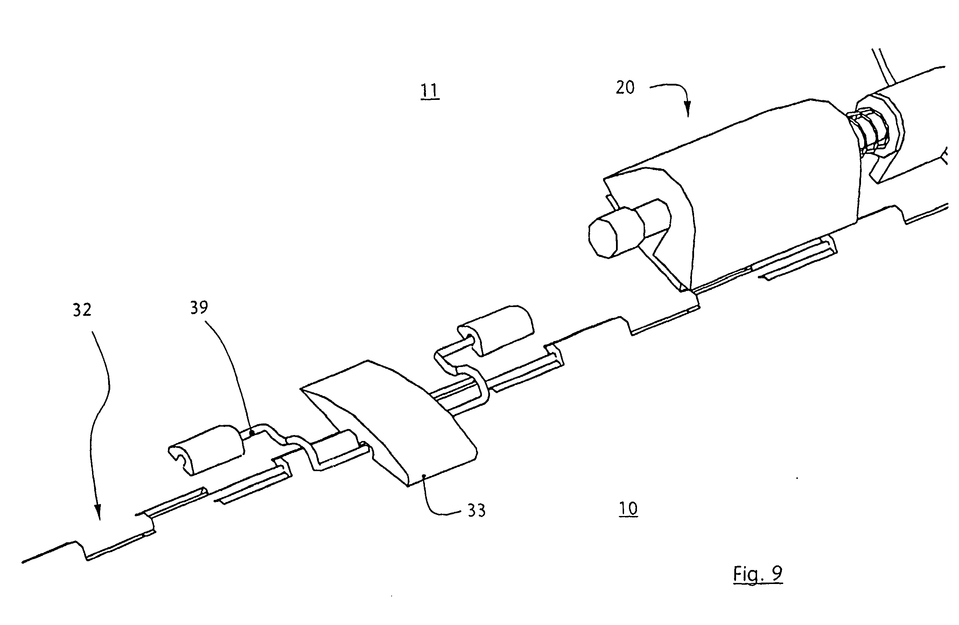

Bei der in Fig. 3 gezeigten Gepäckaufnahmestellung, also bei geschlossenem Dach 3, liegt der mittlere Teil 10 durch seine Eigengewichtskraft und die Spannung des vorderen, flexiblen Teils 9 am unteren Anschlag 34 des hinteren Teils 11 an bzw. wird durch eine unten näher erläuterte Feder 39 in angewinkelter Stellung gehalten. Auch wenn in dieser Position gemäß Fig. 4 der Schwenkhebel 14 umgelegt und der vordere, flexible Teil 9 dadurch entspannt wird, bleibt durch seine Gewichtskraft der Teil 10 in derselben Position. In der in Fig. 3 und Fig. 4 gezeigten im wesentlichen horizontalen Lage des hinteren starren Teils 11 ist ebenfalls eine Arretierung über die seitlich auswärtsgreifenden Arretierungsmittel 20 vorgesehen. In der in den Fig. 8 und 9 dargestellten Ausführung ist zusätzlich eine Drehstabfeder 39 vorgesehen, die die Teile 10 und 11 gegeneinander vorspannt in Richtung der Pfeile 39a in Fig. 5. Dann ist der Anschlag 34 verzichtbar; es genügt, allein den Anschlag 33 vorzusehen.

Der vordere, flexible Teil 9 kann beispielsweise als textiles Gewebe, als Kunststoffolie, Plane oder dergleichen ausgebildet sein bzw. derartig ausgebildete Bereiche umfassen.

Um die Trennvorrichtung 6 aus der in Fig. 2 gezeigten Aufnahmestellung für das Verdeck 3 in die in Fig. 3 gezeigte Gepäckaufnahmestellung mit vergrößertem Kofferraum 7 zu überführen, muß über den Drehgriff 30 die Arretierung über die Arretierungsmittel 20 gelöst werden und gleichzeitig der hintere starre Teil um seine obere Schwenkachse 36 nach vorne verschwenkt werden. Danach greifen die unter Federdruck stehenden Arretierungsmittel 20 automatisch in die entsprechenden Bohrungen der Karosserie ein und werden in der annähernd horizontalen Stellung gesichert. Gleichzeitig fällt der mittlere, ebenfalls starre Teil 10 auf den unteren Anschlag 33 oder wird durch die Feder 39 gehalten, und der vordere flexible Teil 9 erfährt seine maximale Spannung.

Um eine zusätzliche Abstützung des Teils 10, und damit der gesamten Trennvorrichtung 6, in Gepäckaufnahmeposition zu erreichen, ist die in den Fig. 12-17 dargestellte weiterentwickelte Ausführungsform vorgesehen, gemäß der ein Fanghaken 38 vorgesehen ist, der sich beispielsweise beidseits der Querausdehnung des starren Teils 10 erstrecken kann und nach hinten geöffnet ist.

Während der Aufwärtsbewegung des Teils 10 kann dieses in die Öffnung des Fanghakens 38 eingeschoben werden und ist hier gegen ein Herunterfallen gesichert. Die Lagerung des mittleren Teils 10 im Fanghaken 38 ist sowohl bei nach oben als auch nach unten geschwenktem Schwenkgriff 14 gewährleistet.

In der Position nach Fig. 3, Fig. 13 sind beispielsweise Gepäckstücke derart gegen den vorderen Teil 9 schiebbar, daß dieser innerhalb gewisser Toleranzen den nachrückenden Gepäckteilen ausweichen kann, wodurch der Kofferraum 7 maximal vergrößert wird. Da der flexible vordere Teil 9 kaum eigenes Volumen aufgrund seiner dünnen Ausbildung benötigt, ist dadurch der verfügbare Raum erheblich vergrößert. Mit einem weiteren Handgriff läßt sich dann das vordere Ende 13 des vorderen Teils 9 über den Schwenkgriff 14 nach oben bewegen, um dadurch die Skidurchladeöffnung 18 freizugeben. Auch in dieser Stellung kann der Kofferraum 7 mit Gepäckstücken befüllt werden, die dann je nach Ausbildung der Durchladeöffnung 18 teilweise oder vollständig bis in den Fahrzeuginnenraum 19 geschoben werden können. Sowohl die Stellungen nach Fig. 3, Fig. 13 als auch nach Fig. 4, Fig. 14 - Fig. 17 stellen eine mögliche stabile Endstellung dar. Auch in der Stellung nach Fig. 4, Fig. 14 - Fig. 17 mit Zugang zur Durchladeöffnung 18 bleibt der vordere flexible Teil 9 begrenzt dafür geeignet, deformiert zu werden, beispielsweise durch Gegenschieben von Gepäckstücken. Auch in dieser Stellung ist daher neben der Erreichbarkeit der Durchlademöglichkeit 18 zusätzlich die Flexibilität erhöht, das Kofferraumvolumen ist vergrößert gegenüber starren Bauteilen.

Besonders vorteilhaft ist in Freigabestellung des vorderen Endes 13 des vorderen Teils 9, in der die Durchladeöffnung 18 frei zugänglich ist, der vordere Teil 9 mittels einer Spannhilfe 40,41 oder 42 derart gehalten, daß ein Durchhängen, wie es in Fig. 4 gezeigt ist, vermieden wird. Dadurch ist die Gefahr eines Einreißens eines des flexiblen Teils 9 vermindert. Bei der Beladung des Kofferraums muß weniger Sorgfalt angewandt werden.

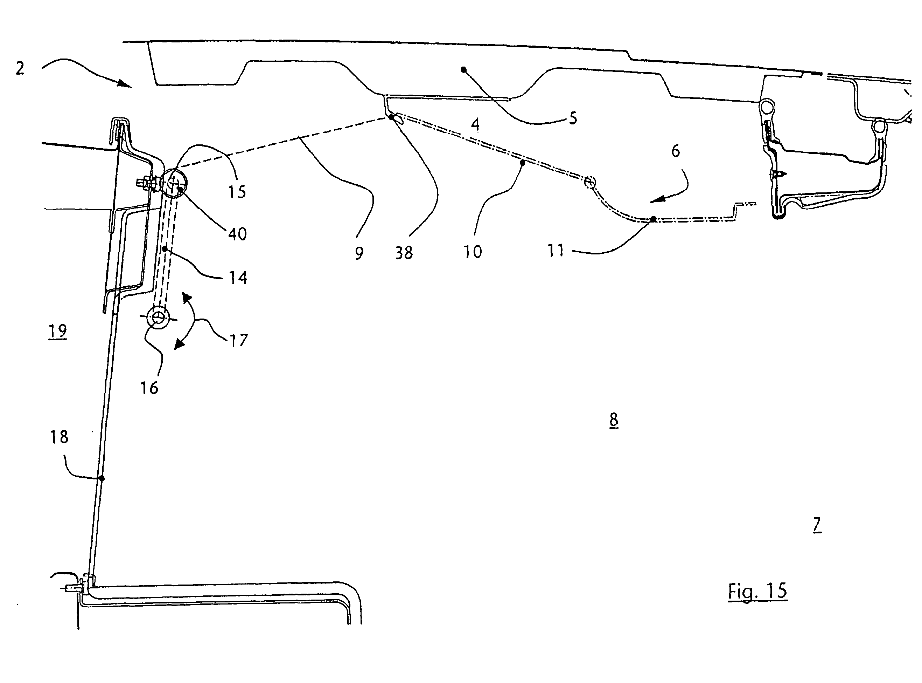

In der Ausbildung nach Fig. 15 ist als Spannhilfe 40 eine Aufrollwalze vorgesehen, so daß der flexible Teil 9 wie ein Rollo um die federnd vorgespannte Walze gewickelt wird. Bei einem Abwärtsverschwenken des Griffes 14 und einer entsprechenden Längung des vorderen Teils 9 wird über die Walze gegen die Kraft der Feder automatisch genügend Material nachgeliefert. Das als Rollo ausgebildete Teil 9 ist daher jederzeit gespannt.

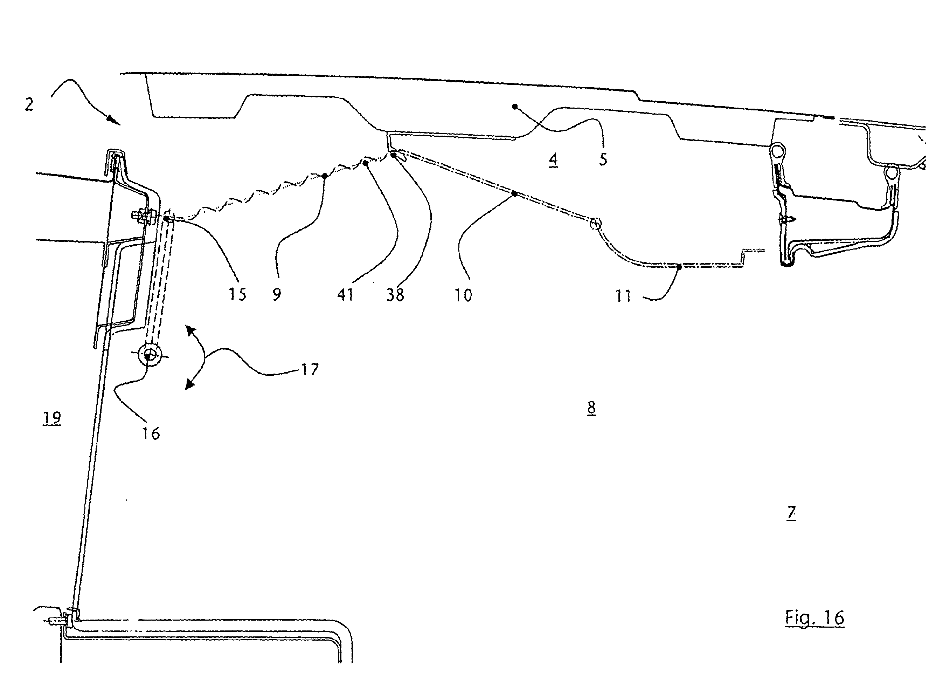

Gemäß einer weiteren Version nach Fig. 16 ist ein seitliches Raffband 41 vorgesehen, das beispielsweise in dem Fahrzeuglängsverlauf folgende Seitenränder eines textil ausgebildeten vorderen Teils 9 eingenäht sein kann. Der vordere Teil 9 wird dabei selbst nicht gespannt, aber durch das Raffband 41 in insgesamt geradliniger Stellung gehalten. Das Raffband 41 hat eine Eigenspannung, so daß dadurch die Federkraft auf den Teil 9 ausgeübt wird.

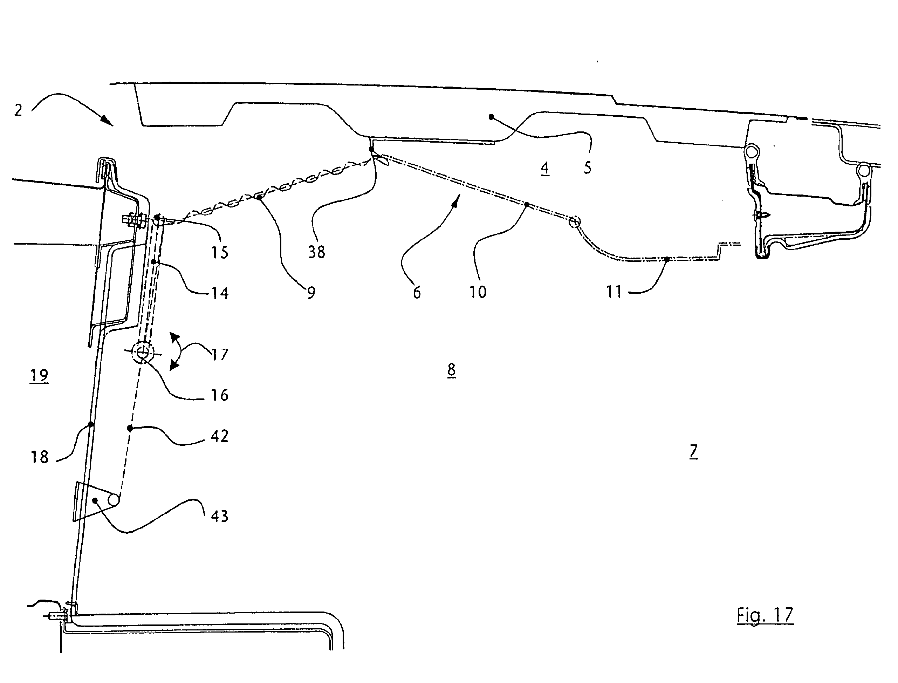

Gemäß einer weiteren Alternative (Fig. 17) ist ein Seilzug 42, der an seinem unteren Ende unterhalb der Skidurchladeöffnung 18 an einem Widerlager 43 gespannt gehalten ist, mit dem vorderen Teil 9 verbunden, beispielsweise in Seitenbahnen eingenäht. Der Seilzug 42 läuft über den Querholm 15 und verläuft in der Stellung nach Fig. 17, in der die Durchladeöffnung 18 freigegeben ist, geradlinig. Damit wirkt der Seilzug 42 als Halteseil für den vorderen Teil 9, der dadurch wellenförmig um diesen Seilzug 42 ungespannt, aber unter Zwangsführung verläuft.

## Patentansprüche

1. Cabriolet-Fahrzeug (1) mit einem in einem Verdeckkasten (4) ablegbaren Dach (3), wobei der Verdeckkasten (4)in einem rückwärtigen Fahrzeugbereich (2) an den Kofferraum (7) angrenzend gelegen und gegenüber diesem durch eine variable Trennvorrichtung (6) abteilbar ist, wobei die Trennvorrichtung (6) einen Zusatzraum (8) zumindest bereichsweise begrenzt und zwischen einer Verdeckaufnahmestellung, in der der Verdeckkasten (4) um den Zusatzraum (8) vergrößert ist, und einer Gepäckaufnahmestellung, in der der Zusatzraum (8) einen Teil des Kofferraums (7) ausbildet, bewegbar ist und wobei die Trennvorrichtung (6) mehrere in Fahrzeuglängsrichtung aufeinanderfolgende Teile (9;10;11) umfaßt, wobei ein vorderer Teil (9) der Trennvorrichtung (6) zumindest bereichsweise flexibel ausgebildet ist, **dadurch gekennzeichnet, daß** der vordere Teil (9) der Trennvorrichtung (6) mit seinem vorderen Endbereich (13) gegenüber der Karosserie höhenverlagerbar gehalten ist.

2. Cabriolet-Fahrzeug nach Anspruch 1, **dadurch gekennzeichnet, daß** der vordere Endbereich (13) des vorderen Teils (9) der Trennvorrichtung (6) zwischen einer unteren Normalposition, in der er eine Durchladeöffnung (18) zwischen dem Kofferraum (7) und dem Fahrzeuginnenraum (19) überdeckt, und einer oberen Freigabeposition, in der die Durchladeöffnung (18) zugänglich ist, beweglich ist.

3. Cabriolet-Fahrzeug nach einem der Ansprüche 1 oder 2, **dadurch gekennzeichnet, daß** der vordere Endbereich (13) an einem Schwenkhebel (14) gehalten ist, der um eine horizontale, sich in Fahrzeugquerrichtung erstreckende und zwischen der Normalposition und der Freigabeposition des vorderen Endbereichs (13) angeordneten Achse (16) schwenkbar ist.

4. Cabriolet-Fahrzeug nach einem der Ansprüche 1 bis 3, **dadurch gekennzeichnet, daß** die Trennvorrichtung (6) dreiteilig ausgebildet ist und der in Fahrtrichtung vordere Teil (9) im wesentlichen flexibel, die beiden weiteren Teile (10;11) im wesentlichen starr ausgebildet sind.

5. Cabriolet-Fahrzeug nach einem der Ansprüche 1 bis 4, **dadurch gekennzeichnet, daß** zur Begrenzung des Schwenkwinkels der starren Teile (10;11) gegeneinander zumindest ein Anschlag (33;34) vorgesehen ist und daß sowohl zur Sicherung der Gepäckaufnahmestellung als auch zur Sicherung der Verdeckaufnahmestellung zumindest ein starrer Teil (11) der Trennvorrichtung (6) arretierbar ist.

6. Cabriolet-Fahrzeug nach einem der Ansprüche 3 bis 5, **dadurch gekennzeichnet, daß** in Gepäckaufnahmestellung der Schwenkhebel (14) frei beweglich ist und sowohl in Normalposition als auch in Freigabeposition eine stabile Lage einnimmt.

7. Cabriolet-Fahrzeug nach einem der Ansprüche 1 bis 6, **dadurch gekennzeichnet, daß** in Verdeckaufnahmestellung eine Blockierung der Höhenverlagerbarkeit des vorderen Endbereichs (13) der Trennvorrichtung (6) vorgesehen ist und dieser in Normalposition gehalten ist.

8. Cabriolet-Fahrzeug nach Anspruch 7, **dadurch gekennzeichnet, daß** dem hinteren starren Teil (11) ein bei geöffnetem Kofferraumdeckel zugängliches Betätigungselement (30) zur Lösung der Arretierung (20) zugeordnet ist.

9. Cabriolet-Fahrzeug nach einem der Ansprüche 7 oder 8, **dadurch gekennzeichnet, daß** die Arretierung der starren Teile (10;11) über federbelastete und auswärts in Gegenlager (24) der Karosserie eingreifende Stifte (22b) bewirkbar ist, die über Zugglieder (28) mit dem Betätigungselement (30) verbunden sind, das zur Freigabe eine Zugkraft gegen die Federbelastung (22a) der Stifte (22b) ausübt.

10. Cabriolet-Fahrzeug nach einem der Ansprüche 4 bis 9, **dadurch gekennzeichnet, daß** in Verdeckaufnahmestellung der hintere starre Teil (11) eine im wesentlichen vertikale Lage einnimmt und der darauffolgende weitere starre Teil (10) in einer an die Horizontale angenäherten Lage gehalten ist und mit seinem vorderen Ende den vorderen, flexiblen Teil (9) der Trennvorrichtung (6) in gespannter Stellung hält.

11. Cabriolet-Fahrzeug nach einem der Ansprüche 4 bis 10, **dadurch gekennzeichnet, daß** in Gepäckaufnahmestellung die beiden starren Teile (10;11) in einer annähernd parallelen und an die Horizontale angenäherten Stellung gehalten sind und der mittlere Teil (10) der Trennvorrichtung (6) mit seinem vorderen Ende bei in Normalposition befindlichem vorderen Endbereich (13) des vorderen Teils (9) der Trennvorrichtung (6) diesen in einer unter Zugspannung gedehnten Stellung hält.

12. Cabriolet-Fahrzeug nach Anspruch 11, **dadurch gekennzeichnet, daß** in Gepäckaufnahmestellung bei in Freigabeposition befindlichem vorderem Endbereich (13) des vorderen Teils (9) der Trennvorrichtung (6) dieser durch Spannhilfen (40;41 ;42) in gespannter Stellung gehalten ist.

## Claims

1. Convertible vehicle (1) having a roof (3) able to be stowed in a folding-roof compartment (4), the folding-roof compartment (4) being positioned adjacent the boot (7) in a rear part (2) of the vehicle and being able to be divided off therefrom by a variable dividing arrangement (6), the dividing arrangement (6) bounding, at least in a region or regions, an additional space (8) and being movable between a folding-roof receiving position in which the folding-roof compartment (4) is enlarged by the additional space (8) and a luggage receiving position in which the additional space (8) forms part of the boot (7), and the dividing arrangement (6) comprising a plurality of parts (9, 10, 11) which succeed one another in the longitudinal direction of the vehicle, a front part (9) of the dividing arrangement (6) being formed to be flexible at least in a region or regions, **characterised in that** the front part (9) of the dividing arrangement (6) is held by its front end-region (13) in such a way as to be displaceable vertically relative to the bodywork.

2. Convertible vehicle according to claim 1, **characterised in that** the front end-region (13) of the front part (9) of the dividing arrangement (6) is movable between a lower normal position in which it covers a loading opening (18) between the boot (7) and the passenger compartment (19) of the vehicle, and an upper uncovering position in which the loading opening (18) is accessible.

3. Convertible vehicle according to either of claims 1 and 2, **characterised in that** the front end-region (13) is held on a pivoting lever (14) which is pivotable about a horizontal axis (16) which extends in the transverse direction of the vehicle and is arranged between the normal position of the front end-region (13) and its uncovering position.

4. Convertible vehicle according to one of claims 1 to 3, **characterised in that** the dividing arrangement is formed to be in three parts and the part (9) which is at the front in the direction of travel is of a substantially flexible form and the other two parts (10, 11) are of a substantially rigid form.

5. Convertible vehicle according to one of claims 1 to 4, **characterised in that** at least one stop (33, 34) is provided to limit the angle of pivot of the rigid parts (10, 11) relative to one another, and **in that** at least one rigid part (11) of the dividing arrangement (6) can be locked both to secure the luggage-receiving position and to secure the folding-roof receiving position.

6. Convertible vehicle according to one of claims 3 to 5, **characterised in that** the pivoting lever (14) is freely movable in the luggage receiving position and assumes a stable position both in the normal position and in the uncovering position.

7. Convertible vehicle according to one of claims 1 to 6, **characterised in that**, in the folding-roof receiving position, provision is made for blocking the vertical displaceability of the front end-region (13) of the dividing arrangement (6) and it is held in the normal position.

8. Convertible vehicle according to claim 7, **characterised in that** the rear rigid part (11) has associated with it an actuating member (30) for releasing the locking means (20), which is accessible when the boot lid is open.

9. Convertible vehicle according to either of claims 7 and 8, **characterised in that** the locking of the rigid parts (10, 11) can be effected by means of spring-loaded pins (22b) which engage in the outward direction in abutments (24) in the bodywork and which are connected via traction members (28) to the actuating member (30), which latter exerts a tractive force in opposition to the spring loading (22a) of the pins (22b) for releasing purposes.

10. Convertible vehicle according to one of claims 4 to 9, **characterised in that**, in the folding-roof receiving position, the rear rigid part (11) occupies a substantially vertical position and the further rigid part (10) which succeeds it is held in a position approximating the horizontal and, by its front end, holds the front flexible part (9) of the dividing arrangement (6) in a tensioned position.

11. Convertible vehicle according to one of claims 4 to 10, **characterised in that**, in the luggage receiving position, the two rigid parts (10, 11) are held in an approximately parallel position approximating to the horizontal and, when the front end-region (13) of the dividing arrangement (6) is in the normal position, the centre part (10) of the dividing arrangement (6) holds it in a stretched position in which it is under tractive tension.

12. Convertible vehicle according to claim 11, **characterised in that** when, in the luggage receiving position, the front end-region (13) of the dividing arrangement (6) is in the uncovering position, it is held in the tensioned position by clamping aids (40, 41, 42).

## Revendications

1. Véhicule cabriolet (1) avec une capote escamotable (3) dans un compartiment de rangement (4), dans lequel le compartiment de rangement (4) adjacent au coffre (7) dans une zone de véhicule arrière (2) peut être séparé de celui-ci par un dispositif séparateur variable (6), le dispositif séparateur (6) délimitant un espace supplémentaire (8) au moins par zone est mobile entre une position de réception de la capote, dans laquelle le compartiment de rangement (4) est agrandi de l'espace supplémentaire (8), et une position de réception des bagages, dans laquelle l'espace supplémentaire (8) forme une partie du coffre (7), et dans lequel le dispositif séparateur (6) comprend plusieurs parties successives (9 ;10 11) dans la direction longitudinale du véhicule, une partie avant (9) du dispositif séparateur (6) étant flexible au moins par zone,
**caractérisé en ce que**
la partie avant (9) du dispositif séparateur (6) est maintenue avec son extrémité avant (13) réglable en hauteur par rapport à la carrosserie.

2. Véhicule cabriolet selon la revendication 1,
**caractérisé en ce que**
l'extrémité avant (13) de la partie avant (9) du dispositif séparateur (6) est mobile entre une position normale inférieure, dans laquelle elle recouvre une ouverture de chargement (18) entre le coffre (7) et l'habitacle du véhicule (19), et une position de libération supérieure, dans laquelle l'ouverture de chargement (18) est accessible.

3. Véhicule cabriolet selon l'une quelconque des revendications 1 ou 2,
**caractérisé en ce que**
l'extrémité avant (13) est maintenue au niveau d'un levier de rotation (14), qui peut pivoter autour d'un axe horizontal (16) s'étendant dans la direction transversale du véhicule et entre la position normale ainsi que la position de libération de l'extrémité avant (13).

4. Véhicule cabriolet selon l'une quelconque des revendications 1 à 3,
**caractérisé en ce que**
le dispositif séparateur (6) est réalisé en trois parties dont la partie avant (9) dans la direction de déplacement est sensiblement flexible, et dont les deux autres parties (10 ; 11) sont sensiblement rigides.

5. Véhicule cabriolet selon l'une quelconque des revendications 1 à 4,
**caractérisé en ce qu'**
au moins une butée (33 ; 34) est prévue pour délimiter l'angle de basculement des parties rigides (10 ; 11) les unes contre les autres, et au moins une partie rigide (11) du dispositif séparateur (6) peut être bloquée aussi bien pour bloquer la position de réception des bagages que pour bloquer la position de réception de la capote.

6. Véhicule cabriolet selon l'une quelconque des revendications 3 à 5,
**caractérisé en ce que**
le levier de rotation (14) est mobile librement dans la position de réception des bagages et prend une position stable aussi bien dans la position normale que dans la position de libération.

7. Véhicule cabriolet selon l'une quelconque des revendications 1 à 6,
**caractérisé en ce que**
dans la position de réception de la capote on a un blocage du réglage en hauteur de l'extrémité avant (13) du dispositif séparateur (6), et celle-ci est maintenue dans la position normale.

8. Véhicule cabriolet selon la revendication 7,
**caractérisé en ce qu'**
un élément d'actionnement (30), accessible lorsque le couvercle du coffre est ouvert, pour détacher le dispositif de blocage (20) est associé à la partie rigide arrière (11).

9. Véhicule cabriolet selon l'une quelconque des revendications 7 ou 8,
**caractérisé en ce que**
le blocage des parties rigides (10 ; 11) peut être provoqué par des tiges (22b) qui s'engrènent par ressort et vers l'extérieur dans le palier-support (24) de la carrosserie, lesquelles tiges sont reliées à l'élément d'actionnement (30) par des barres de traction (28) qui exercent une force de traction contre la charge supportée par le ressort (22a) des tiges (22b) pour la libération.

10. Véhicule cabriolet selon l'une quelconque des revendications 4 à 9,
**caractérisé en ce que**
dans la position de réception de la capote, la partie rigide arrière (11) prend une position sensiblement verticale et l'autre partie rigide suivante (10) est maintenue dans une position proche de l'horizontale, et maintient avec son extrémité avant la partie avant et flexible (9) du dispositif séparateur (6) dans une position tendue.

11. Véhicule cabriolet selon l'une quelconque des revendications 4 à 10,
**caractérisé en ce que**
dans la position de réception des bagages, les deux parties rigides (10 ; 11) sont maintenues dans une position approximativement parallèle et proche de l'horizontale, et, lorsque l'extrémité avant (13) de la partie avant (9) du dispositif séparateur (6) se trouve dans la position normale, la partie centrale (10) du dispositif séparateur (6) maintient son extrémité avant, dans une position allongée sous tension.

12. Véhicule cabriolet selon la revendication 11,
**caractérisé en ce que**
dans la position de réception des bagages, lorsque l'extrémité avant (13) de la partie avant (9) du dispositif séparateur (6) se trouve dans la position de libération, elle est maintenue dans la position tendue par des moyens de serrage (40 ; 41 ; 42).
